# EUROPEAN PATENT APPLICATION

(11) **EP 4 679 680 A1**
(43) Date of publication of application: **14.01.2026**
(21) Application number: 25186048.2
(22) Date of filing: 27.06.2025
(51) Int. Cl.: H02K 5/14, H01R 39/38, H02K 9/28

(54) **BRUSH MODULE**

(30) Priority: 12.07.2024 JP 2024112407
(71) Applicant: Eagle Industry Co., Ltd., Minato-ku Tokyo 105-8587 (JP); Eagle Simrax B.V., 6468 XX Kerkrade Parkstad 4005 (NL)
(72) Inventor: HOFFMANN, Luc, 6468 XX Kerkrade Parkstad 4005 (NL); DIRCKS, Ron, 6468 XX Kerkrade Parkstad 4005 (NL)
(74) Representative: WSL Patentanwälte Partnerschaft mbB

(57) **Abstract**

{Technical Problem} The present invention provides a brush module capable of cooling a brush while stably distributing power.

{Solution to Problem} A brush module 10 includes brushes 11, and a main body 12 attached to a stationary side element 3, the main body having guide surfaces 17a that guide the brushes 11 toward rotating side elements 81, wherein the main body 12 has a flow passage 15 that leads a fluid to positions corresponding to the guide surfaces 17a, a supply port 15a from which the fluid is supplied to the flow passage 15, and recovery ports 15b in which the fluid is recovered from the flow passage 15.

## Description

### {TECHNICAL FIELD}

The present invention relates to a brush module, for example, a brush module of a rotating electrical machine.

### {BACKGROUND ART}

In a brush module utilized to electrically connect a rotating side element and a stationary side element in a rotating electrical machine in various industrial fields, by holding a brush electrically connected to the stationary side element while capable of being brought into sliding contact with the rotating side element, it is possible to maintain electrical connection even at the time of rotation of the rotating side element. In such brush modules, a cooling structure may sometimes be configured in order to prevent an excessive increase in a temperature of the brush and breakdown of various members.

For example, a brush module of Patent Literature 1 includes a brush to be guided to a guide surface of a main body and brought into sliding contact with a slip ring. The main body is configured by fixing two contact members made of a conductive material, the contact members sandwiching an intermediate member made of an insulating material to the intermediate member.

A hole-shaped radial flow passage extending in the radial direction and a hole-shaped axial flow passage extending in the axial direction substantially orthogonally to a radially inner end of the radial flow passage are provided in the intermediate member. The axial flow passage is open toward the axially outer side. A coolant supplied to the radial flow passage flows into the axial flow passage, and is dropped down to the slip ring from the axial flow passage. By supplying the coolant dropped down to the slip ring to the brush following rotation of the slip ring, it is possible to cool the brush.

### {CITATION LIST}

### {Patent Literature}

{Patent Literature 1} US 2023/0065349 A1 (Page 5, FIG. 4)

### {SUMMARY OF INVENTION}

### {Technical Problem}

In such a brush module of Patent Literature 1, by adjusting an amount of the supplied coolant in accordance with the rotation number or a temperature of the rotating electrical machine, it is possible to prevent excessive heat generation. Meanwhile, excessively increasing the amount of the coolant may cause disturbance of electrical connection between the brush and the slip ring, and there is a possibility that a desired power distribution amount cannot be obtained.

The present invention is achieved by focusing on such a problem, and an object thereof is to provide a brush module capable of cooling a brush while stably distributing power.

### {Solution to Problem}

In order to solve the foregoing problem, a brush module according to a first aspect of the present invention is a brush module, including a brush, and a main body attached to a stationary side element, the main body having a guide surface that guides the brush toward a rotating side element, wherein the main body has a flow passage that leads a fluid to a position corresponding to the guide surface, a supply port from which the fluid is supplied to the flow passage, and a recovery port in which the fluid is recovered from the flow passage.

According to the first aspect, by using the fluid flowing from the supply port toward the recovery port, it is possible to cool the brush provided at the position corresponding to the guide surface. Thereby, it is possible to reduce an amount of the fluid supplied to the brush for cooling or there is no need for supplying. Thus, it is possible to stably distribute power between the brush and the rotating side element.

According to a second aspect of the present invention, at least one brush may be provided on each of both axial sides of the main body, and the flow passage may have a first flow passage on one axial side, and a second flow passage on the other axial side.

According to the second aspect, since the fluid is respectively supplied to the first flow passage and the second flow passage, it is possible to reliably cool the brushes provided on both the axial sides.

According to a third aspect of the present invention, the supply port may be one, and the flow passage may have a communication passage that provides communication between the first flow passage and the second flow passage.

According to the third aspect, it is possible to supply the fluid to the first flow passage and the second flow passage by the one supply port.

According to a fourth aspect of the present invention, the flow passage may have a radial flow passage extending from the supply port toward the radially inner side, and a radially inner side flow passage communicating with a radially inner end of the radial flow passage and extending in the circumferential direction.

According to the fourth aspect, it is possible to supply the cold fluid to near a point of the brush whose temperature becomes high due to sliding contact with the rotating side element. Thus, cooling efficiency is high.

According to a fifth aspect of the present invention, the flow passage may have a radially outer side flow passage communicating with the radially inner side flow passage and extending in the circumferential direction on the radially outer side of the radially inner side flow passage, and the radially outer side flow passage may communicate with the recovery port.

According to the fifth aspect, it is possible to also cool portions other than the point of the brush whose temperature becomes high. Thus, the cooling efficiency is high.

According to a sixth aspect of the present invention, the radially outer side flow passage may extend over the entire circumference.

According to the sixth aspect, it is possible to efficiently recover the fluid.

According to a seventh aspect of the present invention, in a region of the main body divided in the circumferential direction, the radially outer side flow passage may extend in the circumferential direction.

According to the seventh aspect, it is possible to lead the fluid for each region of the main body divided in the circumferential direction. Thus, it is possible to cool the plurality of brushes in a balanced manner.

According to an eighth aspect of the present invention, an outlet port communicating with the flow passage, the outlet port from which the fluid is supplied to between the brush and the rotating side element may be provided in the main body.

According to the eighth aspect, it is possible to lubricate and cool the brush and the rotating sealing element by utilizing the fluid.

According to a ninth aspect of the present invention, the main body may have a base member in which a groove configuring at least part of the flow passage is provided, and a cover member that covers an opening of the groove, and the guide surface may be provided in the cover member.

According to the ninth aspect, it is possible to simply and conveniently configure the flow passage that leads the fluid to the position corresponding to the guide surface.

### {BRIEF DESCRIPTION OF DRAWINGS}

FIG. 1 is a sectional view of a rotating electrical machine to which a brush module in a first embodiment according to the present invention is applied.
FIG. 2 is a perspective view of the brush module in the first embodiment.
FIG. 3 is an exploded perspective view of the brush module in the first embodiment.
FIG. 4 is a view in which a base plate in the first embodiment is seen from the axially front side.
FIG. 5 is a view in which the base plate in the first embodiment is seen from the axially rear side.
FIG. 6 is a perspective view of a brush module in a second embodiment according to the present invention.
FIG. 7 is a perspective view of the rear side of a base plate in the second embodiment.
FIG. 8 is a view in which the base plate in the second embodiment is seen from the axially front side.
FIG. 9 is a view in which a base plate serving as a modified example in the second embodiment is seen from the axially front side.
FIG. 10 is a sectional view of a rotating electrical machine to which a brush module in a third embodiment according to the present invention is applied.

### {DESCRIPTION OF EMBODIMENTS}

Modes for carrying out a brush module according to the present invention will be described below on the basis of embodiments.

### {First embodiment}

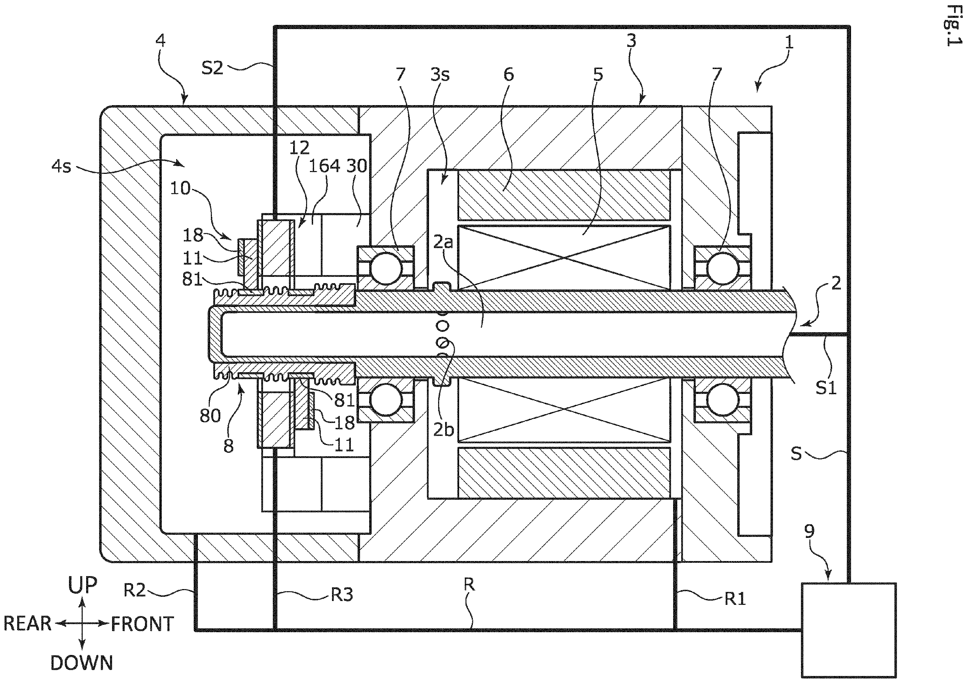

A brush module according to a first embodiment will be described with reference to FIGS. 1 to 5. Hereinafter, a description will be given with the directions illustrated by arrows in the figures as the directions of the brush module. Also, in the present embodiment, an annular member will sometimes be described with a so-called position of 12:00 vertically above an axis thereof serving as zero degrees, and an angle about the axis being increased clockwise such as 120 degrees and 240 degrees.

As illustrated in FIG. 1, a brush module 10 of the present invention is electrically connected to a power source device provided in an exterior, and configures a power transmission system of a rotating electrical machine 1 together with a slip ring unit 8.

The rotating electrical machine 1 includes a rotation shaft 2, a housing 3, a cover 4, a rotor 5, a stator 6, two bearings 7, the slip ring unit 8, and the brush module 10. Also, the rotating electrical machine 1 is connected to a cooling device 9 through a supply pipe and a recovery pipe, and a cooling fluid can be circulated between the rotating electrical machine 1 and the cooling device 9.

It is noted that in the present embodiment, the rotation shaft 2, the rotor 5, and the slip ring unit 8 are rotating side elements. Also, the housing 3, the cover 4, the stator 6, and the brush module 10 are stationary side elements.

Also, the cooling fluid of the present embodiment is insulating (di-electric) oil. However, the present invention is not limited to this but a coolant and the insulating oil may be mixed, or a type or a combination thereof may be appropriately changed.

The rotation shaft 2 has a main flow passage 2a to which a first supply pipe S1 is fluidically connected, and a plurality of branch flow passages 2b extending from an axial center of the main flow passage 2a toward the radially outer side. The first supply pipe S1 is connected to a main supply pipe S in the exterior of the rotating electrical machine 1. The main supply pipe S is a pipe connected to the cooling device 9, the pipe into which the cooling fluid fed out from the cooling device 9 flows.

The housing 3 defines a space 3s. A first recovery pipe R1 is attached to the housing 3. The first recovery pipe R1 communicates with the space 3s and is connected to a main recovery pipe R in the exterior of the rotating electrical machine 1. The main recovery pipe R is a pipe connected to the cooling device 9, the pipe for returning the cooling fluid passing through the rotating electrical machine 1 to the cooling device 9.

It is noted that a fluid circuit that connects the rotating electrical machine 1 and the cooling device 9 is not limited to the pipe but may be configured by a hole directly formed in the housing, for example, or may be appropriately changed.

The rotation shaft 2 is inserted through on the radially inner side of the housing 3 over the axial direction. The bearings 7 are placed between this rotation shaft 2 and the housing 3.

The rotor 5 fitted and fixed onto the rotation shaft 2 and the stator 6 fixed on the inside of the housing 3 are arranged in the space 3s.

The cover 4 is formed in a bottomed cylindrical shape. The cover 4 is fixed to a rear end in the housing 3, and defines a space 4s together with the housing 3. The slip ring unit 8 and the brush module 10 are arranged in the space 4s.

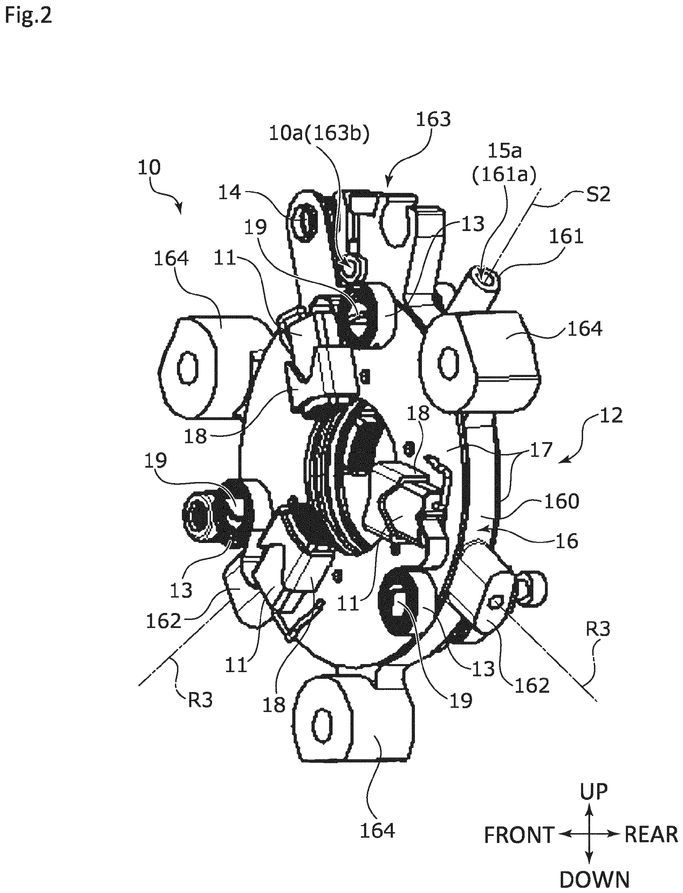

A second supply pipe S2 is inserted through the cover 4. The second supply pipe S2 is connected to the main supply pipe S in the exterior of the rotating electrical machine 1 and to an inlet nozzle 161 in the brush module 10 to be described later (see FIG. 2).

Also, a second recovery pipe R2 is attached to the cover 4. The second recovery pipe R2 communicates with the space 4s and is connected to the main recovery pipe R in the exterior of the rotating electrical machine 1.

Also, a third recovery pipe R3 is inserted through the cover 4. The third recovery pipe R3 is connected to the main recovery pipe R in the exterior of the rotating electrical machine 1. The third recovery pipe R3 branches into two directions in the space 4s and is connected to outlet connectors 162 in the brush module 10 to be described later (see FIG. 2).

The slip ring unit 8 includes a sleeve 80 fitted and fixed onto the rotation shaft 2, and two slip rings 81 fitted and fixed onto the sleeve 80. The two slip rings 81 are arranged while being separated from each other in the axial direction.

With reference to FIGS. 1 to 3, the brush module 10 includes six brushes 11, a main body 12, and six springs 13. The brush module 10 is fixed by screwing bolts inserted through connection fixing portions 164 into female screw portions 30 provided in the rear end in the housing 3 in a state where the brush module 10 is inserted onto the slip ring unit 8 (see FIG. 1).

The brush 11 is made of a conductive carbon material and formed in a plate shape, and an inner peripheral surface is a curved surface capable of being brought into sliding contact with an outer peripheral surface in the slip ring 81. The three brushes 11 are arranged on each of the front side and the rear side in the main body 12. Also, the brushes 11 on the front side are provided at positions of zero degrees, 120 degrees, and 240 degrees, and the brushes 11 on the rear side are provided at positions of 60 degrees, 180 degrees, and 300 degrees. That is, the six brushes 11 are arranged at equal intervals alternately in the circumferential direction between the front side and the rear side.

The main body 12 is an annular member in which an inner hole passing through a radial center in the axial direction is formed. A flow passage 15 through which the fluid can be distributed from the second supply pipe S2 toward the third recovery pipe R3, the flow passage whose details will be described later is formed in the main body 12.

In detail, the main body 12 includes a base plate 16 serving as a base member, two brush plates 17 serving as a cover member, six brush holders 18, and six spring holder lips 19.

The base plate 16 is made of an insulating material such as resin, and has a base portion 160, the inlet nozzle 161 protruding from the base portion 160 toward the radially outer side, the inlet nozzle that introduces the fluid from the second supply pipe S2, the two outlet connectors 162 that guide the fluid to the third recovery pipe R3, a brush plate holder 163, and the three connection fixing portions 164 that fix to the housing 3.

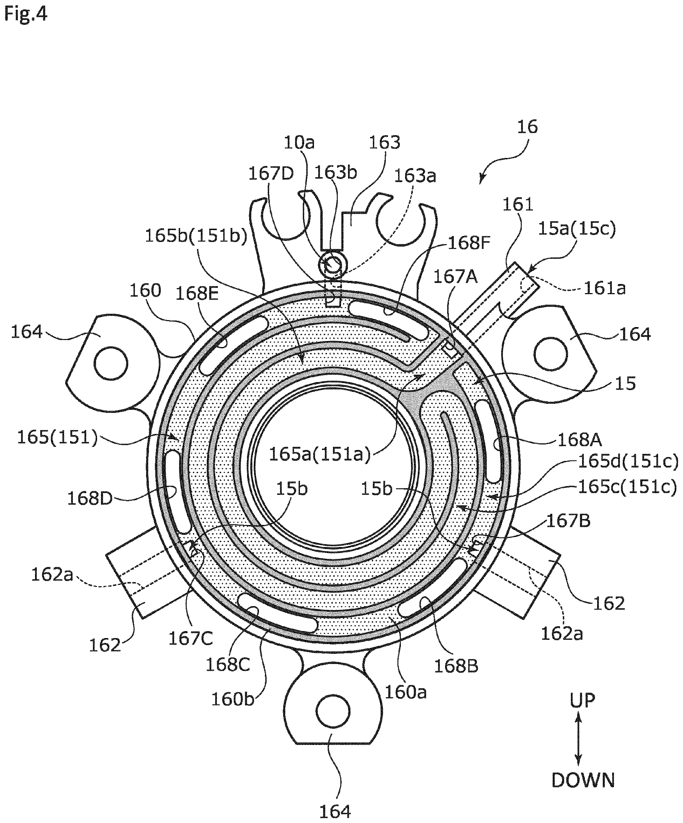

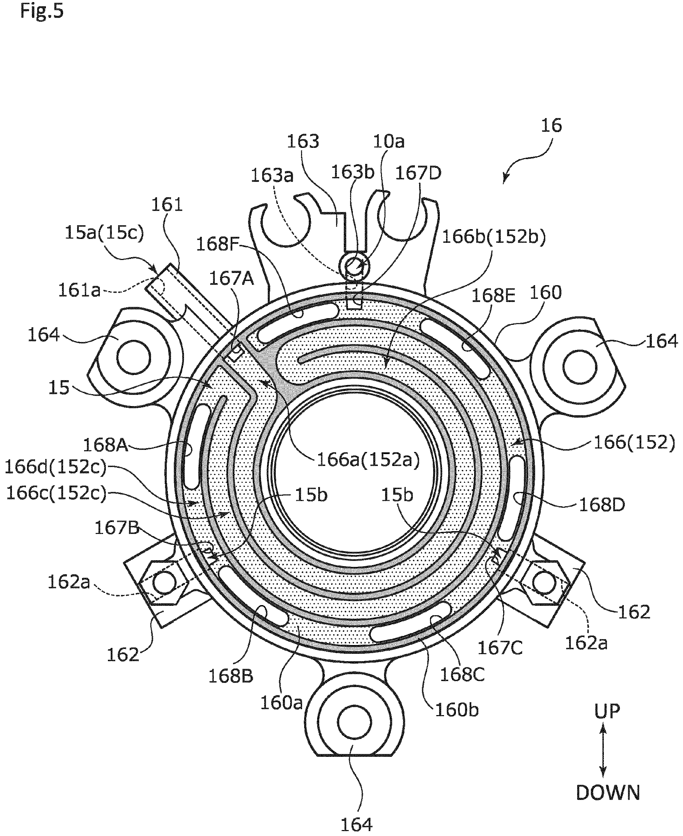

As illustrated in FIGS. 4 and 5, the base portion 160 includes a ring-shaped partition wall 160a formed in an annular plate in the axial center, and fluid guides 160b formed in a standing wall shape, the fluid guides extending from the partition wall 160a respectively forward and rearward in the axial direction, and a first groove 165 on the front side (see FIG. 4) and a second groove 166 on the rear side (see FIG. 5) are formed. Also, on the partition wall 160a, four rectangular holes 167A to 167D passing through in the axial direction, and six long holes 168A to 168F passing through in the axial direction are formed.

It is noted that in FIGS. 4 and 5, the partition wall 160a that partitions the first groove 165 is dotted. Also, the fluid guides 160b that partition the first groove 165 are grayed.

With reference to FIG. 4, the first groove 165 is partitioned and formed by the partition wall 160a serving as a bottom surface and the two inner and outer fluid guides 160b serving as side surfaces, and is open toward the axially front side.

It is noted that the bottom surface of the first groove 165 may be curved or inclined, and a shape thereof may be appropriately changed. Similarly, the side surfaces of the first groove 165 may be curved, may be inclined with respect to the bottom surface, may be formed to have V-shaped sections, or may be appropriately changed. That is, a sectional shape of the first groove 165 may be appropriately changed. The same applies to the second groove 166.

The first groove 165 has, when the base portion 160 is seen from the axially front side, a radial groove 165a extending from a radially inner end in the inlet nozzle 161 toward the radially inner side, a radially inner side groove 165b extending from a radially inner end in the radial groove 165a toward the circumferentially anti-clockwise side, a central groove 165c folded back from an end in the radially inner side groove 165b on the circumferentially anti-clockwise side toward the radially outer side, the central groove extending toward the circumferentially clockwise side, and a radially outer side groove 165d folded back from an end in the central groove 165c on the circumferentially clockwise side toward the radially outer side, the radially outer side groove extending toward the circumferentially anti-clockwise side.

The radially inner side groove 165b extends from the circumferentially anti-clockwise side of the radial groove 165a over the circumferentially clockwise side of the radial groove 165a. From a different viewpoint, the radially inner side groove 165b extends continuously in the circumferential direction over substantially 350 degrees about an axis of the base portion 160. The same applies to the central groove 165c and the radially outer side groove 165d.

Next, the second groove 166 will be described. It is noted that a description overlapping with the first groove 165 will be omitted or simplified. With reference to FIG. 5, the second groove 166 is partitioned and formed by the partition wall 160a and the fluid guides 160b and is open toward the axially rear side.

The second groove 166 has, when the base portion 160 is seen from the axially rear side, a radial groove 166a, a radially inner side groove 166b, a central groove 166c, and a radially outer side groove 166d. When the first groove 165 and the second groove 166 are respectively seen from their own sides, the angle about the axis of the base portion 160 is different between the front side and the rear side but the grooves have the substantially same shape.

As illustrated in FIGS. 4 and 5, the four rectangular holes 167A to 167D are substantially rectangular holes when seen from the axial direction, the holes passing through the partition wall 160a in the axial direction. Also, the four rectangular holes 167A to 167D are formed on the substantially same concentric circle.

In more detail, with reference to FIG. 4, the rectangular hole 167A is formed in a radially outer end in the radial groove 165a, and communicates with a communication hole 161a of the inlet nozzle 161. The rectangular hole 167B is formed at a position of substantially 120 degrees in the radially outer side groove 165d, and communicates with a through hole 162a of the outlet connector 162 on the radially outer side thereof. The rectangular hole 167C is formed at a position of substantially 240 degrees in the radially outer side groove 165d, and communicates with a through hole 162a of the outlet connector 162 on the radially outer side thereof. The rectangular hole 167D is formed at a position of substantially zero degrees in the radially outer side groove 165d, and communicates with a communication hole 163a extending toward the holder 163.

As illustrated in FIGS. 4 and 5, the six long holes 168A to 168F are substantially long hole-shaped holes when seen from the axial direction, the holes passing through the partition wall 160a in the axial direction. Also, the six long holes 168A to 168F are formed on the same concentric circle, and arranged at equal intervals. In more detail, with reference to FIG. 4, the long holes 168A to 168F are formed clockwise from the radial groove 165a and arranged at equal intervals.

As illustrated in FIG. 4, the inlet nozzle 161 extends from a position of substantially 45 degrees in the base portion 160 toward the radially outer side, and has the communication hole 161a. An opening of the communication hole 161a on the radially outer side in the inlet nozzle 161 is a supply port 15a through which the cooling fluid is supplied from the second supply pipe S2 to the flow passage 15.

The two outlet connectors 162 extend from any of positions of substantially 120 degrees and substantially 240 degrees in the base portion 160 toward the radially outer side, and have the through holes 162a. The outlet connectors 162 are to fix the third recovery pipe R3 inserted into the through holes 162a. Openings in the through holes 162a on the radially inner side are recovery ports 15b through which the cooling fluid flows from the flow passage 15 into the third recovery pipe R3. It is noted that two pipes individually connected to the main recovery pipe R may be connected to each of the outlet connectors 162.

The holder 163 extends from a position of substantially zero degrees in the base portion 160 toward the radially outer side, and two cutout potions cut out in an arc shape are formed.

Also, in a circumferential center in the holder 163, the communication hole 163a extending from the rectangular hole 167D toward the radially outer side, and a through hole 163b extending from a radially outer end of the communication hole 163a toward both axial sides are formed. The through hole 163b is open toward both the axial sides. Openings in the through hole 163b on both the axial sides are outlet ports 10a whose details will be described later.

The three connection fixing portions 164 have extended portions extending from any of positions of substantially 60 degrees, substantially 180 degrees, and substantially 300 degrees in the base portion 160 toward the radially outer side, and cylindrical spacer portions protruding from radially outer ends in the extended portions toward the axially front side. Since the connection fixing portions 164 are made of an insulating material, it is possible to prevent that electricity directly flows between the housing 3 and the brush module 10.

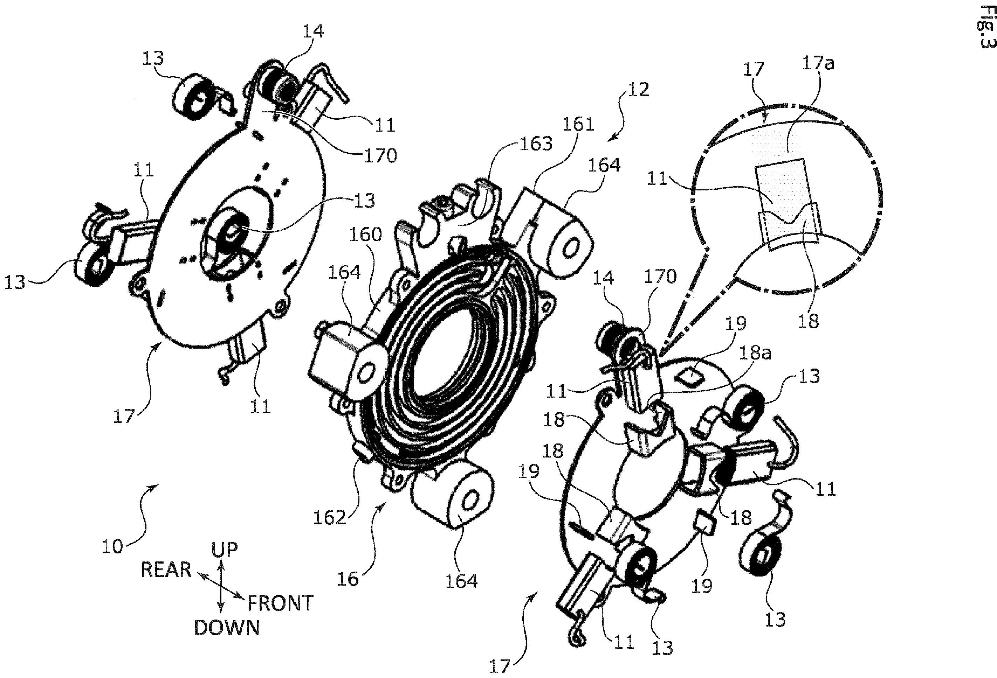

With reference to FIG. 3, the two brush plates 17 are made of metal such as brass and aluminum, and formed in an annular thin plate shape. The brush plates 17 are members of the substantially same shape, and are fixed to the base plate 16. Also, regarding the brush plates 17, the angle about the axis of the base plate 16 is different between the front side and the rear side. Hereinafter, the brush plate 17 on the front side will be described unless otherwise particularly mentioned.

In the brush plate 17, an extended piece 170 extended toward the radially outer side is formed. To a radially outer end of the extended piece 170, a connection feature 14 configured by a screw and a bushing is attached.

The connection feature 14 is to electrically connect a wire electrically connected to the power source device in the exterior to the brush plate 17. That is, the brush plate 17 is electrically connected to the power source device through the connection feature 14 and the wire.

The brush plate 17 on the front side is fixed to the base plate 16 by bolts and nuts (not illustrated) in a state where the connection feature 14 is fitted into the cutout portion of the holder 163 on the circumferentially anti-clockwise side in the base plate 16.

Thereby, an opening of the first groove 165 on the axially front side is closed by the brush plate 17 on the front side, and a first flow passage 151 (see FIG. 4) is defined. Similarly, an opening of the second groove 166 on the axially rear side is closed by the brush plate 17 on the rear side, and a second flow passage 152 (see FIG. 5) is defined.

Since the base plate 16 is made of an insulating material, electricity is prevented from directly flowing between the connection features 14 and the brush plates 17.

The brush holders 18 are made of metal and formed in a gate shape. The three brush holders 18 are arranged at equal intervals and welded and fixed to a front end surface in the brush plate 17. It is noted that a fixing method of the brush plate 17 and the brush holder 18 may be clinching-joining or may be appropriately changed.

The brush plate 17 and the brush holder 18 define an insertion space into which the brush 11 is inserted movably in the radial direction. With reference to a balloon in FIG. 3, a position opposing the brush 11 among the flat front end surface in the brush plate 17 is a guide surface 17a that guides movement of the brush 11, and is dotted. Also, an inner surface in the brush holder 18 that defines the insertion space is a guide surface 18a that guides the movement of the brush 11.

Since both the brush plate 17 and the brush holder 18 are made of metal, the brush plate 17 and the brush holder 18 are electrically connected by abutting with the brush 11. Also, the brush plate 17 and the brush 11 are also electrically connected through an installed cable and the spring 13.

The spring holder lips 19 are made of metal and formed in a thin plate shape. The spring holder lips 19 are welded and fixed to protrude toward the front end side of the front end surface in the brush plate 17. The three spring holder lips 19 are arranged at equal intervals. The springs 13 are fitted and fixed onto the spring holder lips 19.

The springs 13 are metal spiral springs. By being pushed toward the radially inner side by the springs 13, the brushes 11 are held in a state where the brushes 11 are pressed by the slip ring 81.

Next, the flow passage 15 will be described. With reference to FIGS. 4 and 5, the flow passage 15 includes a communication passage 15c, the first flow passage 151 mainly configured by the first groove 165 (see FIG. 4), and the second flow passage 152 mainly configured by the second groove 166 (see FIG. 5). Hereinafter, a description of the second flow passage 152 overlapping with the first flow passage 151 will be omitted or simplified.

The communication passage 15c is a portion that includes the communication hole 161a in the inlet nozzle 161 and the rectangular hole 167A in the base portion 160. The communication passage 15c is part of a radial flow passage of the present invention.

The first flow passage 151 has a radial flow passage 151a communicating with the communication passage 15c, a radially inner side flow passage 151b communicating with the radial flow passage 151a, and a radially outer side flow passage 151c communicating with the radially inner side flow passage 151b.

The radial flow passage 151a is a portion that includes the radial groove 165a. The radial flow passage 151a is part of the radial flow passage of the present invention.

The radially inner side flow passage 151b is a portion that includes the radially inner side groove 165b.

The radially outer side flow passage 151c is a portion that includes the central groove 165c and the radially outer side groove 165d. Also, a portion of the radially outer side flow passage 151c, the portion that includes the radially outer side groove 165d communicates with the recovery ports 15b through the rectangular holes 167B, 167C, and communicates with the outlet port 10a through the rectangular hole 167D.

The portion of the radially outer side flow passage 151c, the portion that includes the radially outer side groove 165d extends continuously in the circumferential direction over substantially 350 degrees about the axis of the base portion 160. In such a way, in the present invention, when the radially outer side flow passage is not formed in an annular shape but has a structure to extend continuously in the circumferential direction over 270 degrees or more to a position where the radial flow passage is sandwiched from both circumferential sides, or over substantially 350 degrees in the present embodiment, it is regarded that the radially outer side flow passage extends over the entire circumference.

The second flow passage 152 has a radial flow passage 152a, a radially inner side flow passage 152b, and a radially outer side flow passage 152c.

The radial flow passage 152a is a portion that includes the radial groove 166a. The radial flow passage 152a is part of the radial flow passage of the present invention.

The radially inner side flow passage 152b is a portion that includes the radially inner side groove 166b.

The radially outer side flow passage 152c is a portion that includes the central groove 166c and the radially outer side groove 166d. Also, a portion of the radially outer side flow passage 152c, the portion that includes the radially outer side groove 166d communicates with the recovery ports 15b through the rectangular holes 167B, 167C, and communicates with the outlet port 10a through the rectangular hole 167D.

Next, cooling of the rotating electrical machine 1 by the cooling device 9 will be described with reference to FIGS. 1, 4, and 5. The cooling device 9 feeds the cooled cooling fluid out to the main supply pipe S by a pump (not illustrated).

The cooling fluid flowing into the first supply pipe S1 flows into the main flow passage 2a in the rotation shaft 2, and is supplied from any of the plurality of branch flow passages 2b to the space 3s and recovered through the first recovery pipe R1. The rotor 5 and the stator 6 are cooled by the cooling fluid supplied to the space 3s.

The space 3s and the space 4s communicate with each other through a clearance of the bearing 7 on the rear side, etc. Thereby, the fluid supplied to the space 3s slightly flows into the space 4s. The cooling fluid flowing into the space 4s is recovered through the second recovery pipe R2.

In such a way, the space 4s is a so-called wet space that includes splashes of the cooling fluid. In the present embodiment, the slip ring unit 8 and the brush module 10 are used as a wet type.

The cooling fluid flowing into the second supply pipe S2 flows from the supply port 15a in the brush module 10 into the flow passage 15.

With reference to FIGS. 4 and 5, the cooling fluid flowing from the supply port 15a into the communication passage 15c is divided into the radial flow passage 151a in the first flow passage 151 and the radial flow passage 152a in the second flow passage 152 by the partition wall 160a, and flows toward the recovery ports 15b. It is noted that in FIGS. 4 and 5, respective flows of the cooling fluid in the communication passage 15c, the first flow passage 151 (see FIG. 4), and the second flow passage 152 (see FIG. 5) are schematically illustrated by arrows.

In more detail, the cooling fluid flowing into the radial flow passage 151a in the first flow passage 151 flows through the radially inner side flow passage 151b and the radially outer side flow passage 151c in this order. Similarly, the cooling fluid flowing into the radial flow passage 152a in the second flow passage 152 flows through the radially inner side flow passage 152b and the radially outer side flow passage 152c in this order.

Then, the cooling fluid flowing into a portion of the radially outer side groove 165d in the radially outer side flow passage 151c and a portion of the radially outer side groove 166d in the radially outer side flow passage 152c flows into the third recovery pipe R3 through the recovery ports 15b, and is recovered in the cooling device 9 through the third recovery pipe R3.

In such a way, by the cooling fluid flowing through the flow passage 15, the brush plates 17 on the front side and the rear side are cooled substantially entirely in the circumferential direction from the radially inner side to the radially outer side.

Also, the cooling fluid flowing into the portion of the radially outer side groove 165d in the radially outer side flow passage 151c is capable of flowing into the portion of the radially outer side groove 166d in the radially outer side flow passage 152c through the rectangular holes 167B to 167D and the six long holes 168A to 168F. The same applies to the cooling fluid flowing into the portion of the radially outer side groove 166d.

In more detail, the long hole 168A communicates with a closed circumferential end portion of the radially outer side groove 165d in the first groove 165 (see FIG. 4) and a circumferential end portion of the radially outer side groove 166d in the second groove 166, the circumferential end portion being folded back from and connected to the central groove 166c (see FIG. 5).

Also, the long hole 168F communicates with a closed circumferential end portion of the radially outer side groove 166d in the second groove 166 (see FIG. 5) and a circumferential end portion of the radially outer side groove 165d in the first groove 165, the circumferential end portion being folded back from and connected to the central groove 165c (see FIG. 4).

Thereby, the radially outer side flow passage 151c in the first flow passage 151 and the radially outer side flow passage 152c in the second flow passage 152 function like annularly continuous flow passages although having the closed circumferential end portions. From this, it is possible to smoothly distribute the cooling fluid through both the first flow passage 151 and the second flow passage 152.

Also, part of the cooling fluid flowing into the rectangular hole 167D passes through the communication hole 163a and the through hole 163b in the holder 163, and is dropped down from any of the outlet ports 10a on the front side and the rear side toward the slip ring 81 on the front side or the slip ring 81 on the rear side. The slip rings 81 and the brushes 11 are cooled while being lubricated by the dropped-down cooling fluid. The cooling fluid dropped down to the slip rings 81 is recovered through the second recovery pipe R2.

As described above, the brush module 10 of the present embodiment can cool the brush plates 17 by using the fluid flowing through the flow passage 15 from the supply port 15a toward the recovery ports 15b, and cool the brushes 11 placed at the guide surfaces 17a by the cooled brush plates 17. Also, it is possible to cool the brushes 11 placed at the guide surfaces 18a by the brush holders 18 cooled by the cooled brush plates 17.

Also, the brush module 10 can recover part of the fluid flowing from the supply port 15a in the third recovery pipe R3 through the recovery ports 15b. Thus, it is possible to reduce an amount of the cooling fluid to be supplied to the brushes 11 for cooling. From this, it is possible to stably distribute power between the brushes 11 and the slip rings 81.

Also, the rectangular hole 167D is provided on the vertically upper side of the rectangular holes 167B, 167C. In addition, the communication hole 163a extends from the rectangular hole 167D toward the vertically upper side. Thereby, the cooling fluid supplied from the second supply pipe S2 preferentially and more easily flows into the third recovery pipe R3 through the recovery ports 15b, and an amount of the cooling fluid to be dropped down from the outlet ports 10a is more easily reduced.

Also, the sum of flow passage sectional areas of the recovery ports 15b and a flow passage sectional area of the communication hole 163a are adjusted so that even when a feeding amount of the cooling fluid per unit time is maximum, an amount of the cooling fluid to be dropped down from the outlet port 10a is less than 0.2 L/min. Herein, the feeding amount of the cooling fluid becomes maximum in a case where a temperature of the rotating electrical machine 1 becomes a certain level or more or in a case where the rotation shaft 2 is rotated at high speed, etc., that is, in a case where high heat is generated or in a case where high heat can be generated.

From results of an experiment in which the same cooling fluid as the present embodiment was utilized, it is proved that by making the amount of the cooling fluid to be dropped down from the outlet port 10a less than 0.2 L/min, lubrication is continuously maintained without preventing a power distribution amount per unit time. As clear from the results of the experiment, the brush module 10 of the present embodiment can stably maintain cooling of the brushes 11 and lubrication of the brushes 11 and the slip rings 81.

Also, the flow passage 15 has the first flow passage 151 and the second flow passage 152. Thereby, the cooling fluid is respectively supplied to the first flow passage 151 and the second flow passage 152. Thus, the cooling fluid is less disproportionate in the brush plate 17 on the front side and the brush plate 17 on the rear side. From this, it is possible to reliably cool the brushes 11 provided on both the axial sides.

Also, the flow passage 15 has the communication passage 15c. Thus, it is possible to supply the cooling fluid to the first flow passage 151 and the second flow passage 152 by the one supply port 15a.

Also, the flow passage 15 has the communication passage 15c, the radial flow passages 151a, 152a, and the radially inner side flow passages 151b, 152b. Thereby, the brush module 10 can supply the cooling fluid held in a cold state to near sliding contact points of the brushes 11 whose temperatures become high due to sliding contact with the slip rings 81. Thus, cooling efficiency is high.

Also, in the flow passage 15, the radially outer side flow passages 151c, 152c communicating with the radially inner side flow passages 151b, 152b communicate with the recovery ports 15b, 15b. Thereby, the brush module 10 can also supply the cooling fluid to positions overlapping with portions other than the points in the brushes 11 whose temperatures become high and cool the portions other than the points of the brushes 11 whose temperatures become high. Thus, the cooling efficiency is high. Also, the cooling fluid is firstly supplied to the radially inner side in the brushes 11 and then the slightly warmed cooling fluid is supplied to the radially outer side in the brushes 11. Thus, it is possible to efficiently cool the entire brushes 11.

Also, the portions of the radially outer side flow passages 151c, 152c, the portions that include the radially outer side grooves 165d, 166d extend over the entire circumference. Thus, it is possible to efficiently recover the cooling fluid.

Also, with a simple and convenient structure of the main body 12 in which the brush plates 17 on the front side and the rear side are attached to the base plate 16 in which the first groove 165 and the second groove 166 are provided, it is possible to configure the flow passage 15 that leads the cooling fluid to the positions corresponding to the guide surfaces 17a.

It is noted that the configuration in which the cooling fluid can be recovered from any of the two recovery ports 15b is described in the present embodiment. However, the present invention is not limited to this but the third recovery pipe R3 may be connected only to one of the recovery ports 15b and the other recovery port 15b may be closed. That is, as long as the cooling fluid can be recovered from at least one of the recovery ports 15b, the number of the recovery ports may be appropriately changed. Thereby, it is possible to adjust an amount of the cooling fluid to be recovered from the recovery ports 15b and the amount of the cooling fluid to be dropped down from the outlet port 10a.

Further, the recovery ports 15b can lead the cooling fluid to a position separated from the vertically upper side of the slip ring unit 8 through the through hole 162a. Thus, the recovery ports 15b may be open toward the space 4s.

Even with such a configuration, the cooling fluid flowing out from the recovery ports 15b to the space 4s is recovered through the second recovery pipe R2 without being dropped down to the brushes 11 and the slip rings 81. Thus, it is possible to reduce an amount of the cooling fluid to be supplied to between the brushes 11 and the slip rings 81. That is, the recover ports are not limited to the configuration in which the recovery ports are connected to a circuit directly connecting to the cooling device, but may be indirectly connected through a space, etc.

Also, an electromagnetic valve capable of adjusting an opening degree may be provided in the middle of the third recovery pipe R3, etc. With such a configuration, by adjusting the opening degree in accordance with the feeding amount of the cooling fluid, it is possible to make the amount of the cooling fluid to be dropped down from the outlet port 10a an proper amount.

Also, in the present embodiment, the configuration in which the two outlet ports 10a communicate with the flow passage 15 through the one communication hole 163a is described. However, the present invention is not limited to this but each of the outlet ports may communicate with the flow passage through an independent communication hole. Also, the number of the outlet ports 10a may be appropriately changed.

In the present embodiment, the example in which the brush module 10 drops the cooling fluid down from the outlet ports 10a is described. However, the present invention is not limited to this but may have a dry mode in which the outlet ports 10a are closed and only recovery of the cooling fluid is performed. Even with such a configuration, it is possible to indirectly cool the brushes 11 by using the fluid flowing through the flow passage 15 from the supply port 15a toward the recovery ports 15b.

### {Second embodiment}

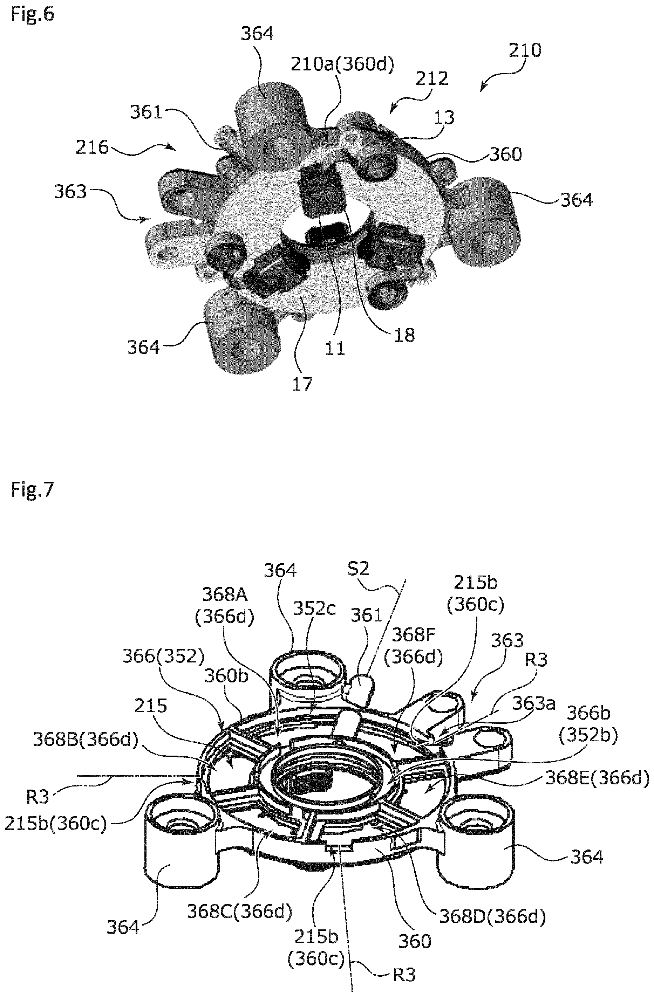

Next, a brush module according to a second embodiment will be described with reference to FIGS. 6 to 9. It is noted that a description of the same overlapping configurations as the embodiment described above will be omitted.

As illustrated in FIGS. 6 to 8, in a brush module 210 of the second embodiment, a structure relating to a flow passage 215 in a main body 212 is mainly different from the main body 12 of the first embodiment. In the first embodiment, the example in which the fluid flows along the circumferential direction is described. However, in the present embodiment, a structure is that a fluid flows from the front side to the rear side or from the rear side to the front side in each of six regions.

A base plate 216 has a base portion 360, an inlet nozzle 361, a holder 363, and three connection fixing portions 364, whereas the outlet connectors 162 in the first embodiment are omitted.

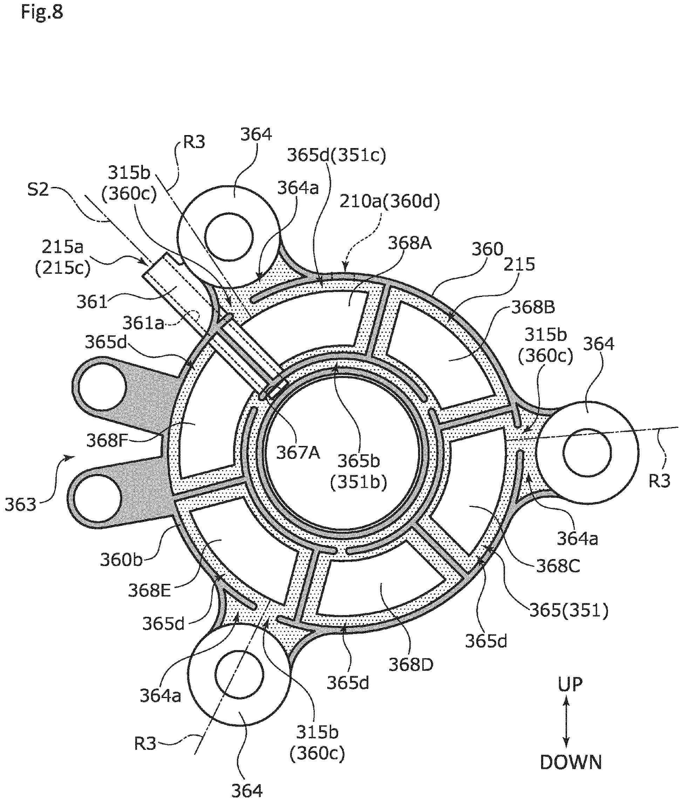

As illustrated in FIGS. 7 and 8, in the base portion 360, a first groove 365 (see FIG. 8), a second groove 366 (see FIG. 7), one rectangular hole 367A, and six long holes 368A to 368F are formed.

As illustrated in FIG. 8, the first groove 365 has an annular radially inner side groove 365b, and six radially outer side grooves 365d formed in an arc shape on the radially outer side of the radially inner side groove 365b. The radially inner side groove 365b configures a radially inner side flow passage 351b in a first flow passage 351 of the present embodiment.

The six radially outer side grooves 365d are partitioned in the circumferential direction by a fluid guide 360b, and positions are matched with positions of guide surfaces 17a of six brushes 11. That is, the six radially outer side grooves 365d extend in the circumferential direction in six regions of the main body 212 divided in the circumferential direction, and configure six radially outer side flow passages 351c in the first flow passage 351 of the present embodiment.

With reference to FIG. 7, the second groove 366 has an annular radially inner side groove 366b, and six radially outer side grooves 366d extending in the circumferential direction. The radially inner side groove 366b configures a radially inner side flow passage 352b in a second flow passage 352 of the present embodiment.

Positions of the six radially outer side grooves 366d are matched with positions of the six radially outer side grooves 365d in the first groove 365. The six radially outer side grooves 366d configure six radially outer side flow passages 352c in the second flow passage 352 of the present embodiment.

With reference to FIG. 8, the radially inner side groove 365b communicates with the radially inner side groove 366b (see FIG. 7) through the rectangular hole 367A. Also, the rectangular hole 367A communicates with a through hole 361a in the inlet nozzle 361. A portion that includes the through hole 361a and the rectangular hole 367A configures a communication passage 215c of the present embodiment. Also, an opening on the radially outer side in the through hole 361a is a supply port 215a.

With reference to FIGS. 7 and 8, the radially outer side groove 365d in the first groove 365 and the radially outer side groove 366d in the second groove 366 communicate with each other through any of the long holes 368A to 368F. The long holes 368A to 368F are formed at positions corresponding to the six regions of the main body 212 divided in the circumferential direction. Hereinafter, the positions of the six regions will be described as the positions of the long holes 368A to 368F.

Regarding the radially outer side grooves 365d, 366d where the long hole 368A is placed, the radially outer side groove 366d in the second groove 366 communicates with the radially inner side groove 366b (see FIG. 7). Also, the radially outer side groove 365d in the first groove 365 communicates with a recess portion 364a in the connection fixing portion 364 through a through groove 360c extending from the radially outer side groove 365d toward the radially outer side (see FIG. 8). An opening on the radially inner side in the through groove 360c is a recovery port 315b. The same applies to the radially outer side grooves 365d, 366d where the long holes 368C, 368E are placed. It is noted that the recess portion 364a is formed in an extended portion in the connection fixing portion 364.

Regarding the radially outer side grooves 365d, 366d where the long hole 368D is placed, the radially outer side groove 365d in the first groove 365 communicates with the radially inner side groove 365b (see FIG. 8). Also, the radially outer side groove 366d in the second groove 366 communicates with a through groove 360c extending from the radially outer side groove 366d toward the radially outer side (see FIG. 7). An opening on the radially inner side in the through groove 360c is a recovery port 215b. The same applies to the radially outer side grooves 365d, 366d where the long hole 368B is placed.

Regarding the radially outer side grooves 365d, 366d where the long hole 368F is placed, the radially outer side groove 365d in the first groove 365 communicates with the radially inner side groove 365b (see FIG. 8). Also, the radially outer side groove 366d in the second groove 366 communicates with a through groove 363a passing through the holder 363 through a through groove 360c (see FIG. 7). An opening on the radially inner side in the through groove 360c is a recovery port 215b.

Also, a third recovery pipe R3 is connected to the two through grooves 360c on the rear side in the base portion 360, the respective recess portions 364a of the three connection fixing portions 364, and the through groove 363a in the holder 363 in a sealed manner.

As illustrated in FIG. 8, on the front side in the base portion 360, a through hole 360d extending from the radially outer side groove 365d where the long hole 368A is placed toward the radially outer side is formed. An opening on the radially outer side in the through hole 360d is an outlet port 210a.

The flow passage 215 has the communication passage 215c, the first flow passage 351, and the second flow passage 352. Hereinafter, a cooling fluid flowing through the flow passage 215 will be described. However, since a flow from the supply port 215a to any of the recovery ports 215b is substantially the same, the radially outer side grooves 365d, 366d where the long holes 368A, 368D are placed will be described as an example.

The cooling fluid flowing from the radially inner side flow passage 352b in the second flow passage 352 into the radially outer side groove 366d where the long hole 368A is placed flows toward the radially outer side groove 365d in the first flow passage 351 through the long hole 368A. In other words, the cooling fluid flows toward the guide surfaces 17a of the brushes 11 on the front side. Thus, it is possible to efficiently cool the guide surfaces 17a of the brushes 11 on the front side.

Also, the cooling fluid flowing into the radially outer side groove 365d in the first flow passage 351 flows to the radially outer side toward the recovery port 215b. Thus, it is possible to efficiently cool the entire guide surface 17a of the one brush 11 on the front side. The same applies to the radially outer side grooves 365d, 366d where the long holes 368C, 368E are placed.

The cooling fluid flowing from the radially inner side flow passage 351b in the first flow passage 351 into the radially outer side groove 365d where the long hole 368D is placed flows toward the radially outer side groove 366d in the second flow passage 352 through the long hole 368D. In other words, the cooling fluid flows toward the guide surfaces 17a of the brushes 11 on the rear side. Thus, it is possible to efficiently cool the guide surfaces 17a of the brushes 11 on the rear side.

Also, the cooling fluid flowing into the radially outer side groove 366d in the second flow passage 352 flows to the radially outer side toward the recovery port 215b. Thus, it is possible to efficiently cool the entire guide surface 17a of the one brush 11 on the rear side. The same applies to the radially outer side grooves 365d, 366d where the long holes 368B, 368F are placed.

In such a way, the brush module 210 of the present embodiment can lead the cooling fluid for each of the regions of the main body 212 divided in the circumferential direction. Thus, it is possible to cool the plurality of brushes 11 in a balanced manner.

Also, part of the cooling fluid flowing into the radially outer side groove 365d in the first flow passage 351 flows out to an exterior of the base portion 360 from the outlet port 210a through the through hole 360d. By dropping this flowing-out cooling fluid down to the slip ring 81 on the front side or the rear side, it is possible to maintain cooling of the brushes 11 and lubrication of the brushes 11 and the slip ring 81.

In such a way, the brush module 210 of the present embodiment can provide the outlet port 210a from which the cooling fluid can be dropped down to the slip rings 81 on the front side and the rear side only with the one through hole 360d. Thus, a structure of the brush module 210 is simpler than the brush module 10 in the first embodiment. Meanwhile, regarding a point that the amounts of the cooling fluid to be dropped down to the slip rings 81 on the front side and the rear side can be made the same level, the brush module 10 in the first embodiment is more preferable.

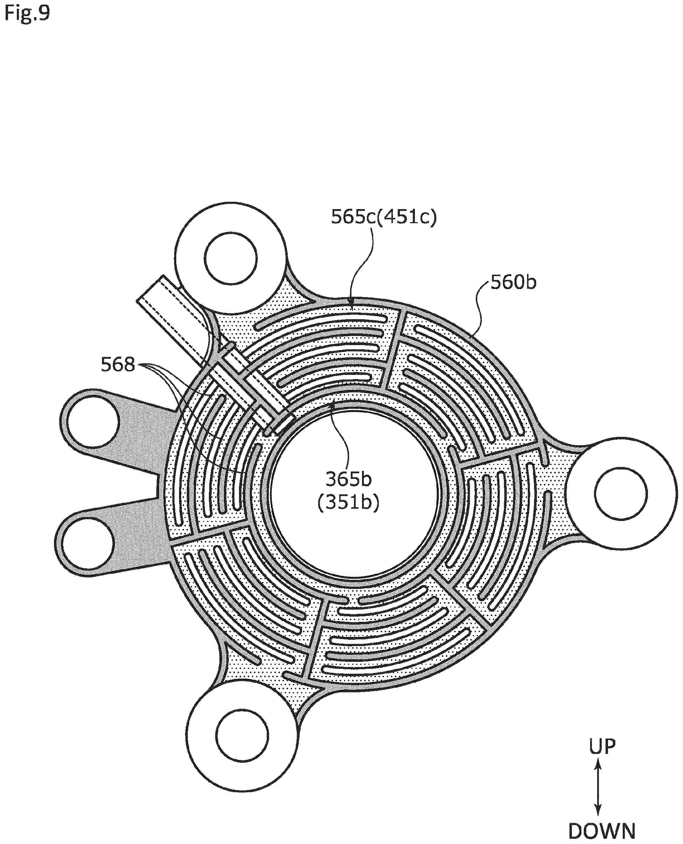

It is noted that the configuration in which one region, that is, the one radially outer side flow passage 351c partitioned in the circumferential direction by the fluid guide 360b includes the radially outer side groove 365d extending along the circumferential direction is described in the present embodiment. However, as in a radially outer side flow passage 451c illustrated in FIG. 9, a radially outer side groove 565c partitioned in the circumferential direction by a fluid guide 560b may be folded back at least once or more times at circumferential ends. With such a configuration, it is possible to stably cool each region as a whole.

Also, the configuration in which any one of the long holes 368A to 368F is formed in the one radially outer side flow passage 351c partitioned in the circumferential direction by the fluid guide 360b is described. However, the present invention is not limited to this but as in the radially outer side flow passage 451c illustrated in FIG. 9, a plurality of long holes 568 may be formed.

### {Third embodiment}

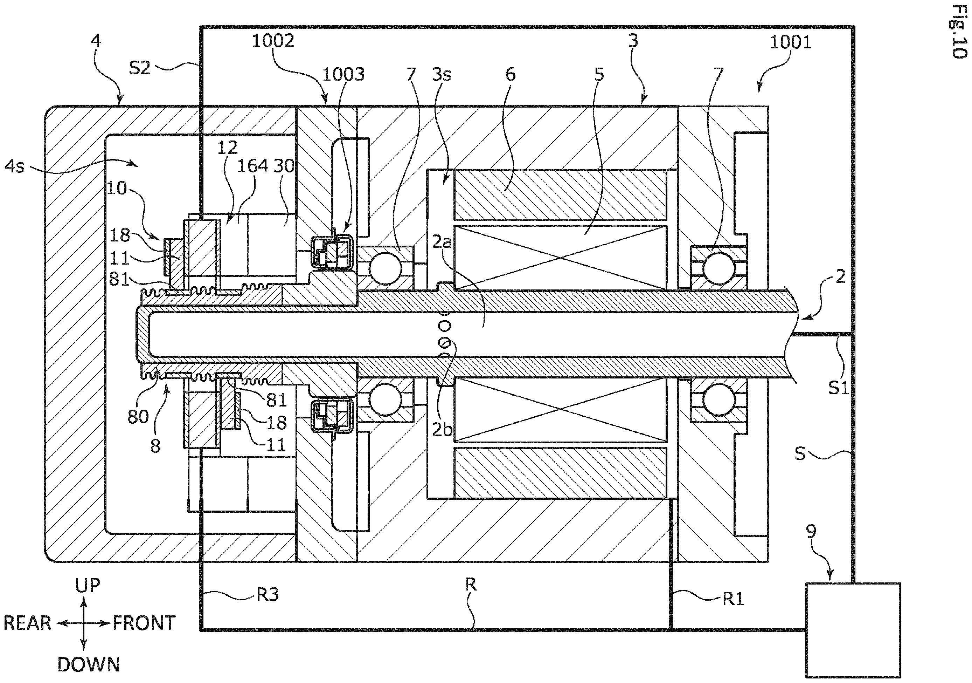

Next, a brush module according to a third embodiment will be described with reference to FIG. 10. It is noted that a description of the same overlapping configurations as the embodiments described above will be omitted.

As illustrated in FIG. 10, in a rotating electrical machine 1001, a tubular spacer 1002 is provided between a housing 3 and a cover 4. Also, a mechanical seal 1003 is arranged between the spacer 1002 and a rotation shaft 2 in the radial direction. The mechanical seal 1003 seals a portion between spaces 3s, 4s.

Thereby, a cooling fluid flowing into the space 3s is prevented from flowing into the space 4s. That is, the space 4s is a so-called dry space. In the present embodiment, a slip ring unit 8 and a brush module 10 are used as a dry type. In the present embodiment, the second recovery pipe R2 is omitted.

As described in the first embodiment, the brush module 10 can indirectly cool brushes 11 by using the fluid flowing through a flow passage 15 from a supply port 15a toward recovery ports 15b. Thus, there is no need for supplying the cooling fluid to the brushes 11 for cooling. From this, the brush module 10 can stably distribute the power between the brushes 11 and slip rings 81 while keeping the space 4s as a dry space by closing outlet ports 10a or connecting a third recovery pipe R3 to the outlet ports 10a and using as the recovery ports 15b.

It is noted that in the rotating electrical machine 1001 of the present embodiment, the portion between the spaces 3s, 4s is sealed by the mechanical seal 1003. Thus, different fluids may be supplied respectively to the space 3s and the space 4s. That is, the space 4s may be a wet space. With such a configuration, the outlet ports 10a in the brush module 10 may be open.

The embodiments of the present invention have been described above with the drawings. However, specific configurations are not limited to these embodiments, and the present invention includes even changes and additions within the range not departing from the gist of the present invention.

For example, the first to third embodiments describe that the brush module is applied to the rotating electrical machine such as an electric motor or a power generator. However, the present invention is not limited to this but as the rotating electrical machine is a rotating electrical machine in which power distribution is required between a stationary side element and a rotating side element, an appropriate change can be made.

Also, the first to third embodiments describe the configuration in which the brush plates are provided on the front side and the rear side in the brush module. However, the present invention is not limited to this but the brush plates may be provided on only one of the sides.

Also, the first to third embodiments describe the configuration in which the flow passage has the first flow passage and the second flow passage. However, the present invention is not limited to this but a flow passage may not be partitioned into a first flow passage and a second flow passage in the axial direction.

Also, the first to third embodiments describe the configuration in which the flow passage has only one supply port. However, the present invention is not limited to this but the number of supply ports may be appropriately changed.

Also, the first to third embodiments describe the configuration in which one flow passage extends to cool the substantially entire brush plate. However, the present invention is not limited to this but one flow passage may be formed for one guide surface or an appropriate change may be made. Also, the substantially entire brush plate may be cooled by a plurality of flow passages.

Also, the first to third embodiments describe the configuration in which the flow passage and the brushes are partitioned by the brush plate in a sealed manner. However, the present invention is not limited to this but for example, cooling may be performed by directly attaching the cooling fluid to the brushes through slits which can be sealed by the brushes.

Also, the first to third embodiments describe that the flow passage is configured by closing the opening of the groove formed in the base plate by the brush plate in the brush module. However, the present invention is not limited to this but the flow passage may be configured only by the base plate, or further, the base plate itself may guide the brushes and the brush plate may be omitted.

For example, the flow passage may be configured by forming a groove in one of pieces of a base plate halved in the axial direction and closing an opening of this groove by the other piece of the base plate. With such a configuration, the base plate may be made of a conductive material and the brush holder may be directly fixed to the base plate. That is, the base plate may have guide surfaces.

### {REFERENCE SIGNS LIST}

- 1: Rotating electrical machine
- 9: Cooling device
- 10: Brush module
- 10a: Outlet port
- 11: Brush
- 12: Main body
- 15: Flow passage
- 15a: Supply port
- 15b: Recovery port
- 15c: Communication passage (radial flow passage)
- 16: Base plate (base member)
- 17: Brush plate (cover member)
- 17a: Guide surface
- 18a: Guide surface
- 81: Slip ring (rotating side element)
- 151: First flow passage
- 151a: Radial flow passage
- 151b: Radially inner side flow passage
- 151c: Radially outer side flow passage
- 152: Second flow passage
- 152a: Radial flow passage
- 152b: Radially inner side flow passage
- 152c: Radially outer side flow passage
- 165: First groove (groove)
- 166: Second groove (groove)
- 210: Brush module
- 210a: Outlet port
- 212: Main body
- 215: Flow passage
- 215a: Supply port
- 215b: Recovery port
- 215c: Communication passage (radial flow passage)
- 216: Base plate (base member)
- 351: First flow passage
- 351b: Radially inner side flow passage
- 351c: Radially outer side flow passage
- 352: Second flow passage
- 352b: Radially inner side flow passage
- 352c: Radially outer side flow passage
- 365: First groove
- 366: Second groove
- 451c: Radially outer side flow passage
- 1001: Rotating electrical machine

## Claims

1. A brush module, comprising:
a brush; and
a main body attached to a stationary side element, the main body having a guide surface that guides the brush toward a rotating side element,
wherein the main body has a flow passage that leads a fluid to a position corresponding to the guide surface, a supply port from which the fluid is supplied to the flow passage, and a recovery port in which the fluid is recovered from the flow passage.

2. The brush module according to claim 1,
wherein at least one brush is provided on each of both axial sides of the main body, and
wherein the flow passage has a first flow passage on one axial side, and a second flow passage on the other axial side.

3. The brush module according to claim 2,
wherein the supply port is one, and
wherein the flow passage has a communication passage that provides communication between the first flow passage and the second flow passage.

4. The brush module according to any one of claims 1 to 3,
wherein the flow passage has a radial flow passage extending from the supply port toward the radially inner side, and a radially inner side flow passage communicating with a radially inner end of the radial flow passage and extending in the circumferential direction.

5. The brush module according to claim 4,
wherein the flow passage has a radially outer side flow passage communicating with the radially inner side flow passage and extending in the circumferential direction on the radially outer side of the radially inner side flow passage, and
wherein the radially outer side flow passage communicates with the recovery port.

6. The brush module according to claim 5,
wherein the radially outer side flow passage extends over the entire circumference.

7. The brush module according to claim 5,
wherein in a region of the main body divided in the circumferential direction, the radially outer side flow passage extends in the circumferential direction.

8. The brush module according to claim 1,
wherein an outlet port communicating with the flow passage, the outlet port from which the fluid is supplied to between the brush and the rotating side element is provided in the main body.

9. The brush module according to claim 1,
wherein the main body has a base member in which a groove configuring at least part of the flow passage is provided, and a cover member that covers an opening of the groove, and
wherein the guide surface is provided in the cover member.
